(19) Europäisches Patentamt

European Patent Office

Office européen des brevets

(11) **EP 0 997 075 A1**

(12) **EUROPEAN PATENT APPLICATION**

(43) Date of publication:
**03.05.2000 Bulletin 2000/18**

(51) Int Cl.7: **A23D 7/00**, A23D 7/015, A23J 7/00

(21) Application number: **99308581.0**

(22) Date of filing: **29.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.10.1998 GB 9823836**

(60) Divisional application: **00200790.4**

(71) Applicant: **St. Ivel Limited**
**Swindon, Wiltshire SN4 7EF (GB)**

(72) Inventor: **Gupta, Bharat Bhushan**
**Bath, Avon BA1 4 NG (GB)**

(74) Representative: **Daniels, Jeffrey Nicholas et al**
**Page White & Farrer**
**54 Doughty Street**
**London WC1N 2LS (GB)**

(54) **Edible emulsion**

(57)    An edible water-in-oil-in-water emulsion comprising an external water phase and a dispersed phase which comprises a water-in-oil emulsion having a fat phase and an internal water phase, wherein the water-in-oil emulsion includes an emulsifier comprising an alcohol-insoluble fraction of vegetable lecithin.

**Description**

The present invention relates to edible water-in-oil-in-water (W/O/W) emulsions and the use in those emulsions of water-in-oil (W/O) emulsifiers.

It is known to make water-in-oil-in-water (W/O/W) emulsions comprising an external water phase and a dispersed phase, the dispersed phase being a water-in-oil (W/O) emulsion comprising a continuous fat phase and an internal water phase. They are typically made by forming a W/O emulsion (or primary emulsion) using a W/O emulsifier, and then dispersing this in an external water phase using an oil-in-water (O/W) emulsifier. It is also known to use phase reversal to form the W/O/W emulsion. The external water phase and/or the internal water phase may contain other components such as thickeners or solutes having osmotic effect.

Among W/O emulsifiers known for this purpose are a sorbitan fatty acid ester such as a Span (TM), a lecithin, a monoglyceride or diglyceride (such as monoerucin or dierucin), a surface active copolymer such as Pluronic (TM), a sucrose fatty acid ester or a polyglycerol polyricinoleate (PGPR). W/O/W emulsions incorporating these emulsifiers are disclosed, for example, in JP-A-61174938, JP-A-60102137, EP-A-0141477, EP-A-0239378, GB-A- 2143839, JP-A-63157951, US-A-4626344, US-A-4632840, US-A-4808334, US-A-5332595, WO-A-9503707 and WO-A-9517953. Of these W/O emulsifiers, PGPR is preferred because it is found to be more effective and can be used in lower amounts than some of the other emulsifiers. However, PGPR suffers from disadvantages in that it produces off flavours and has limited acceptability in many countries in the types of food in which it can be used.

The present invention aims to overcome the disadvantages of the prior art and to provide an improved edible water-in-oil-in-water emulsion.

It is a further aim of the present invention to provide an improved food product comprising the emulsion.

It is yet a further aim of the present invention to provide uses for the emulsion.

It is still a further aim of the present invention to provide a method for preparing the emulsion.

These aims are achieved by the present invention.

Accordingly, the present invention provides an edible water-in-oil-in-water emulsion comprising an external water phase and a dispersed phase which comprises a water-in-oil emulsion having a fat phase and an internal water phase, wherein the water-in-oil emulsion includes an emulsifier comprising an alcohol-insoluble fraction of vegetable lecithin obtainable using alcohols with 1 to 3 carbon atoms.

The present invention also provides a food product comprising the emulsion.

The present invention also provides use of the emulsion as a diary product substitute.

The present invention also provides a method of preparing an edible water-in-oil-in-water emulsion comprising emulsifying an internal water phase with a fat phase comprising an alcohol-insoluble fraction of vegetable lecithin obtainable using alcohols with 1 to 3 carbon atoms to form a water-in-oil emulsion and emulsifying the water-in-oil emulsion with an external water phase.

The present invention now will now be described in more detail with reference to the accompanying drawings, in which:

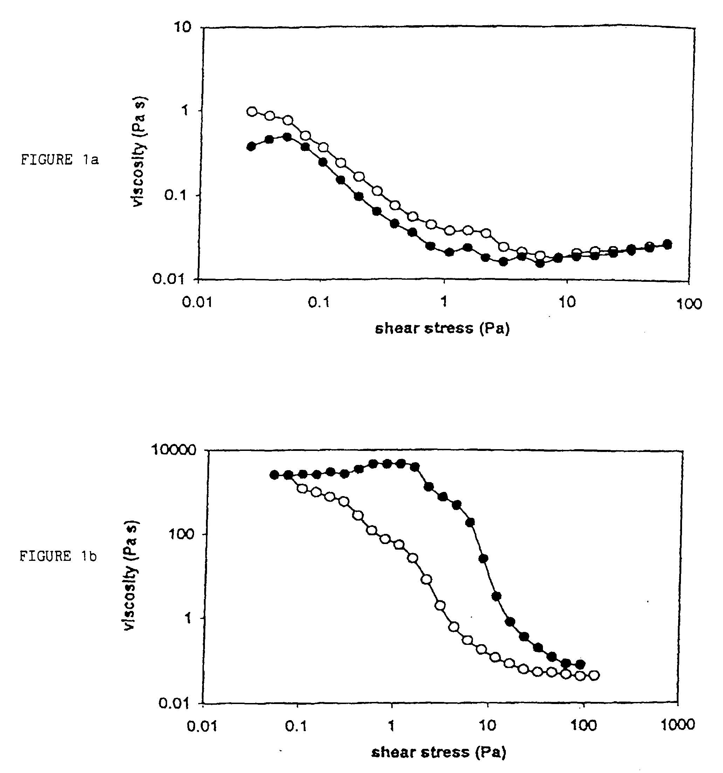

Figure 1a shows a graph of shear viscosity (0.01-10Pa s)versus shear stress for W/O/W emulsions prepared in accordance with Example 3D;

Key: -o- emulsion with RSO

-●- emulsion with standard AMF

Figure 1b shows a graph of shear viscosity (0.01-10000Pa s) versus shear stress for W/O/W emulsions prepared in accordance with Example 3D

Key: -o- emulsion with RSO

-●- emulsion with standard AMF

As mentioned above, the present invention provides an edible water-in-oil-in-water emulsion, comprising (i) an external water phase and (ii) a dispersed phase which comprises a water-in-oil emulsion, wherein the water-in-oil emulsion includes an emulsifier comprising an alcohol-insoluble fraction of vegetable lecithin.

The present applicants have found that by using an alcohol-insoluble fraction of vegetable lecithin as the W/O emulsifier, better W/O/W emulsions can be made, having more water retention in the internal water phase, less fat separation, and a better flavour and more creamy mouthfeel. Furthermore, the alcohol-insoluble fraction of vegetable lecithin is a more natural additive with a much wider range of permitted uses than polyglycerol polyricinoleate. Preferably the alcohol-insoluble fraction of vegetable lecithin has a low hydrophile-lipophile balance value.

Lecithins are naturally-occurring phospholipids which may be extracted from various vegetable sources including oil seeds such as sunflower seeds, rapeseed and soyabeans, as well as from eggs. The alcohol-insoluble fractions are obtainable by alcohol extraction of a lecithin sample derived from a vegetable source, using alcohols containing 1 to 3 carbon atoms. These alcohol-insoluble fractions of lecithin are characterized by a lowered proportion of phosphatidylcholine in the phospholipids and a raised proportion of the acidic phospholipids phosphatidyl-inositol and, to a lesser extent, phosphatidylethanolamine. They can either be liquid products containing certain amounts of neutral lipids, or they can be powders prepared by de-oiling the liquid products with for example acetone. Such alcohol-insoluble lecithin fractions are found to be more effective in forming W/O emulsions than prior art unfractionated lecithins, typically having hydrophile-lipophile balance values of 1 to 3. Preferably the alcohol-insoluble fractions of vegetable lecithin have a hydrophile-lipophile balance value of 1 to 2.

Typical ranges of concentration for the three major phospholipids in unfractionated soyabean lecithins and in the alcohol-insoluble fractions of soyabean lecithins according to the present invention are given in Table 1. Suitable alcohol-insoluble fractions of vegetable lecithins include a deoiled fractionated soyabean lecithin powder known as VP609 (Lucas Meyer), a fractionated liquid soyabean lecithin known as VP627 (Lucas Meyer), and a fractionated liquid soyabean lecithin known as Nathin PI-3F (Stern Chemicals/Natterman Phospholipid).

Table 1

|  | Unfractionated soyabean lecithins (oil-free basis) | Alcohol-insoluble fractions of soyabean lecithins (oil-free basis) |
|---|---|---|
| Phosphatidylcholine | 22-25% | 6-8.5% |
| Phosphatidylethanolamine | 20-23% | 22-24% |
| Phosphatidylinositol | 15-20% | 20-24% |

The alcohol-insoluble fractions of vegetable lecithin of the present invention are further characterized by the ratios of their constituent phospholipids, in that they have a phosphatidylcholine:phosphatidylethanolamine ratio of from 1:1.25 to 1:5 and a phosphatidylcholine:phosphatidylinositol ratio of from 1:1.25 to 1:6. Preferably they have a phosphatidylcholine: phosphatidylethanolamine ratio of from 1:1.75 to 1:5 and a phosphatidylcholine:phosphatidylinositol ratio of from 1:1.75 to 1:5, more preferably they have a phosphatidylcholine:phosphatidylethanolamine ratio of from 1:2.5 to 1:5 and a phosphatidylcholine:phosphatidylinositol ratio of from 1:2 to 1:5.

An important reason for making edible W/O/W emulsions is to provide a method for lowering the fat content of edible O/W emulsions by incorporating a water phase into the discontinuous fat phase, thus allowing the replacement of some of the fat phase by a water phase without, in theory, affecting the physical or organoleptic properties of the emulsion. Another reason for making edible W/O/W emulsions is to take advantage of the different physical properties which may result from incorporating a water phase into discontinuous fat phase. Whether or not the physical and/or organoleptic properties are changed in the W/O/W emulsion with respect to a comparable O/W emulsion will depend on the method of making the emulsions and the particular ingredients used as thickeners, emulsifiers, or other components in the water phases and fat phase of the W/O/W emulsion.

The edible W/O/W emulsions of the invention can be used on their own as replacements for O/W emulsions, particularly dairy products that are O/W emulsions. The W/O/W emulsions of the invention will contain less fat than the W/O emulsions that they replace, but will have the same creamy mouthfeel. Alternatively the W/O/W emulsions of the invention can be used as ingredients in other food products in order to impart a creamy mouthfeel to them while reducing fat content. Such food products may include, for example, yogurts, fromage frais, soft cheese, cheese spreads, dairy desserts, dips, sauces, mayonnaise, dressings, creams, milk drinks, and milk shakes.

The primary W/O emulsion of the W/O/W emulsions of the invention comprises a fat phase containing an alcohol-insoluble fraction of vegetable lecithin as the emulsifier and an internal water phase dispersed in the fat phase.

The fat phase can consist of any of the edible oils or fats normally used in food products or a mixture of any such oils or fats. Suitable liquid oils include any of those normally used in food production, for example vegetable oils and hydrogenated vegetable oils, for example rapeseed oil, sunflower oil, safflower oil, corn oil, soyabean oil or mixtures of thereof. Suitable solid fats for inclusion in blends include butteroil, anhydrous milk fat, fractionated anhydrous milkfat and hydrogenated vegetable oils. The particular oils and fats used in any application will depend on the physical and nutritional properties required in the end-product, and the skilled person will have no difficulty in choosing suitable oils and fats.

The alcohol-insoluble fraction of vegetable lecithin is typically used as the emulsifier at a concentration expressed on an oil-free basis of 0.1 to 20% by weight of the primary W/O emulsion, preferably at a concentration expressed on an oil-free basis of 1 to 15% by weight of the primary W/O emulsion, more preferably at a concentration expressed on an oil-free basis of 2 to 10% by weight of the primary W/O emulsion. The phrase "expressed on an oil-free basis" means that the amount of emulsifier is expressed on the basis of the acetone-insoluble matter contained in the emulsifier.

Typically, the mean droplet size on a volume distribution basis (d[4,3]) of the W/O/W emulsion is in the range 1.5 to 10μm, preferably in the range 2 to 5 μm, when the external and internal water phases contain no added solutes having an osmotic effect or functional food ingredients and have a pH in the range 6 to 7.

The internal water phase may also contain added functional ingredients commonly used in food products, for example colours, flavourings, sweeteners, antioxidants, preservatives, acidulants, stabilisers, thickeners and gelling agents. In particular, hydrocolloids such as starches, xanthan gum, guar gum, gelatin, agar, maltodextrins and gellan gum can be used as stabilisers, thickeners or gelling agents. The concentration at which functional ingredients will be used will depend on the characteristics required in the end product, and will be known to the skilled person.

An advantage of the stable W/O/W emulsions made using an alcohol-insoluble fraction of vegetable lecithin as the W/O emulsifier is that the internal water phase may contain solutes having an osmotic effect, such as sodium chloride or sugars or mixtures thereof, without affecting the stability of the emulsion. Sodium chloride concentrations of 0.2 to 1.0M have less effect on the stability of emulsions made with an alcohol-insoluble fraction of vegetable lecithin than on the stability of emulsions made with polyglycerol polyricinoleate. In the latter case the droplets of fat phase containing the internal water phase tend to swell and burst.

The fat phase, containing the oils and the emulsifier, comprises 18 to 99% by weight of the primary W/O emulsion, preferably 30 to 80% by weight of the primary W/O emulsion, more preferably 35 to 60% by weight of the primary W/O emulsion.

The external water phase must contain an O/W emulsifier. Any O/W emulsifier suitable for food use may be used in the external water phase, for example lecithins, sucrose fatty acid esters, gum arabic, or protein-containing emulsifiers such as sodium caseinate, skimmed milk powder, whole milk powder, buttermilk powder, whey protein concentrate, whey protein isolate, soya protein concentrate, and soya protein isolate. The O/W emulsifier is typically used at a concentration of 0.05 to 5.0% by weight of the external water phase, preferably 0.1 to 2.0% by weight of the external water phase, more preferably 0.2 to 1.0% by weight of the external water phase.

The external water phase may also contain added functional ingredients commonly used in food products, for example colours, flavourings, sweeteners, antioxidants, preservatives, acidulants, stabilisers, thickeners, and gelling agents. It may also contain solutes having an osmotic effect, such as sodium chloride or sugars or mixtures thereof, without affecting the stability of the emulsion.

The ratio of primary W/O emulsion to external water phase is typically in the range 60:40 to 10:90 by weight of the W/O/W emulsion, preferably 40:60 to 15:85 by weight of the W/O/W emulsion.

To make a W/O/W emulsion the following general procedure is used.

### 1. Preparation of Primary Emulsion

a. Prepare the internal water phase by dissolving the water-soluble ingredients in water.

b. Prepare the fat phase by blending any oil or fat ingredients together.

c. Dissolve the alcohol-insoluble fraction of vegetable lecithin in the fat phase.

d. Optionally heat the water phase and fat phase separately. The water phase and fat phase may typically be heated to a temperature of 20 to 95°C, preferably to 40 to 85°C, more preferably to 45 to 75°C

e. Combine the water phase and fat phase to form a water-in-oil emulsion by use of a mixing and/or homogenizing process. If a homogenization process is used, it may be carried out at 20 to 100 MPa, using 1, 2 or 3 passes through the homogenizer.

f. Optionally pasteurize the primary emulsion. This may suitably be carried out by heating to a temperature of 65 to 95°C for 1 to 30 minutes.

g. Optionally cool the primary emulsion to a temperature of -1 to 10°C, and store at this temperature if necessary.

### 2. Preparation of the Secondary (W/O/W) Emulsion

a. Prepare the external water phase by dissolving any water-soluble ingredients in water.

b. Optionally heat the primary emulsion and the external water phase separately. They may typically be heated to temperature of 5 to 50°C.

c. Combine the primary emulsion and the external water phase to form a water-in-oil-in-water emulsion using a mixing and/or a homogenization process. If a homogenization process is used, it may be carried out at 9.5 to 35 MPa, preferably at 10.5 to 21 MPa, more preferably at 11 to 17 MPa, using 1 pass through the homogenizer.

d. Optionally pasteurise the water-in-oil-in-water emulsion at a temperature of 75 to 95°C for 1 to 5 minutes.

e. Cool the water-in-oil-in-water emulsion to a temperature of 4 to 5°C.

**Example 1**

W/O/W emulsions were prepared as follows:

| Internal water phase | (1) & (2) water | |
|---|---|---|
| | (3) 0.5M sodium chloride in water | |
| Fat phase | 85.45% oil + 14.55% emulsifier | |
| Oil | (1) | rapeseed oil |
| | (2) | rapeseed oil + anyhydrous milk fat of MP 28°C to give 5% solid fat content at 20°C. |
| | (3) | standard anhydrous milkfat |
| Emulsifier | (a) | polyglycerol polyricinoleate |
| | (b) | an alcohol-insoluble fraction of vegetable lecithin (VP609, obtained from Lucas Meyer) |
| Primary W/O emulsion | 45% water + 55% fat phase | |
| External water phase | (1) & (2) 0.25% sodium caseinate in water | |
| | (3) 0.25% sodium caseinate and 0.2M sodium chloride in water | |
| W/O/W emulsion | 20% primary emulsion + 80% external water phase | |
| | Overall composition was 88.8% water, 9.4% oils and fats, 1.6% emulsifier, 0.2% sodium caseinate | |

Primary emulsions were prepared by mixing the water and fat phase at 65°C and passing once through a Rannie homogenizer at 40 MPa. They were then cooled and stored at 4°C overnight. The primary emulsions were heated to 44°C before being mixed with the external water phase to form a coarse emulsion by blending with an Ultraturrax blender for 1 to 2 minutes. The coarse emulsion was then homogenized once at 15 MPa.

The W/O/W emulsions were analyzed for the following parameters:

mean droplet size (d[4,3] by laser scattering particle size distribution analysis, using a Malvern MasterSizer 2000 (Version 1)) ;
retained yield at 90 hours and 18 days (% of the original internal water phase content remaining in the fat phase) by differential scanning calorimetry (other suitable methods include the dye method and thermogravimetric analysis;
viscosity (using a Brookfield Vicsometer Model DV-1);
fat separation (%) by visual estimation.

The results of the analyses are shown in Table 2.

Table 2

| Oil & Water Phases | Emulsifier | D[4,3] ( m) | Retained Yield | Viscosity (Visual) | Appearance (Visual) |
|---|---|---|---|---|---|
| 1 | PGPR | 3 | 47% @ 21d | Like milk | Fine emulsion |
| 1 | Lecithin | 3.5 | 80% @ 21d | Thicker than milk | Very fine emulsion |
| 2 | PGPR | 3 | 38% @ 21d | Like water | Fat lumps on surface |
| 2 | Lecithin | 5 | 83% @ 21d | Like thin cream | Very fine emulsion |
| 3 | PGPR | NA | 54% @ 7d | Like water | 80% fat on the surface |
| 3 | Lecithin | >6 | 84% @ 7d | Like thin cream | Very fine emulsion |
| NA : not applicable since all the fat had separated out | | | | | |

The results of the analyses can be summarized as follows:

1. Mean particle size was higher in the emulsions made with the alcohol-insoluble fraction of vegetable lecithin than in the emulsions made with polyglycerol polyricinoleate, and it was stable over three weeks.

2. The retained yield was much higher in the emulsions made with the alcohol-insoluble fraction of vegetable lecithin than in the emulsions made with polyglycerol polyricinoleate, and it was stable over three weeks.

3. The viscosity of the emulsions made with the alcohol-insoluble fraction of vegetable lecithin was higher than the viscosity of the emulsions made with polyglycerol polyricinoleate, the latter being affected by the amount of fat separation.

4. The amount of fat separation was higher in the emulsions made with polyglycerol polyricinoleate than in the emulsions made with the alcohol-insoluble fraction of vegetable lecithin, which showed no fat separation.

5. Light microscopy confirmed that W/O/W emulsions were being formed in all cases.

6. The emulsions made with the alcohol-insoluble fraction of vegetable lecithin had a much pleasanter taste than the emulsions made with polyglycerol polyricinoleate, which had a castor oil flavour.

**Example 2**

W/O/W emulsions were prepared according to the method of Example 1 as follows:

| Internal water phase water | | |
|---|---|---|
| Fat phase | 85.45% oil + 14.55% emulsifier | |
| Oil | (1) | rapeseed oil + anhydrous milkfat of MP 28°C to give 2% solid fat content at 20°C |
| | (2) | standard anhydrous milkfat |
| Emulsifier | | an alcohol-insoluble fraction of soyabean lecithin (VP609, obtained from Lucas Meyer) |
| Primary W/O emulsion | 45% water + 55% fat phase | |
| External water phase | 0.25% sodium caseinate in water | |
| W/O/W emulsion | 20% primary emulsion + 80% external water phase Overall composition was 88.8% water, 9.4% oils and fats, 1.6% emulsifier, 0.2% sodium caseinate | |

Comparative emulsions were made up as follows:

A. Dilute double cream to 11% fat content with a 0.25% sodium caseinate solution in water (external water phase of Example 1);
B. Prepare a O/W emulsion according to the method of Example 1 with the following overall composition: 88.8% water, 9.4% anhydrous milkfat, 1.6% alcohol-insoluble fraction of vegetable lecithin (VP609), 0.2% sodium caseinate; pasteurize and cool.

The two example emulsions and the two comparative emulsions were then diluted with pasteurized skimmed milk to give milk substitute products containing 1% fat, which were subjected to organoleptic analysis, the results of which are given in Table 3.

Table 3

| Example emulsion - oil 1 | Creamy, good flavour |
|---|---|
| Example emulsion - oil 2 | Very creamy, sweet, whiter appearance |
| Comparative emulsion A | Creamy, lacked mouthfeel |
| Comparative emulsion B | Creamy but watery, slight fat flakes on surface |

The w/O/W emulsion of the example emulsion (oil 2) showed a creamier taste than the O/W emulsion of comparative examples A and B, which contained the same amount of fat.

**Example 3**

Preparation of primary emulsions:

The primary emulsifier was dispersed with continuous agitation in the oil at 60-65°C and kept at this temperature until all the emulsifier was dispersed. The water soluble ingredients as appropriate were added to the primary water phase and heated to 60-65°C. The two phases were passed through a laboratory scale high pressure jet homogeniser as described by Burgaud, I., Dickinson, E. & Nelson, P.V. *(International Journal of Food Science and Technology* 1990, 25, 39-46) at 40MPa. The emulsion was stored in the refrigerator at 4°C overnight.

Preparation of W/O/W emulsions:

The primary emulsion was heated to 40-45°C. The required ingredients were added to the secondary water phase and heated to 40-45°C. The two phases were passed through a laboratory scale jet homogeniser as described above at 14MPa once or twice. The final W/O/W emulsion was then stored in a refrigerator or at room temperature. Sodium azide was added at 0.05% in both water phases if the product was stored at ambient temperature and not required for organoleptic purposes.

Yield Analysis

(a) Dye method

The % of the amount of water retained in the primary emulsion was initially determined by the dye method as follows: 0.005 wt% of Poly R-478 (violet) was encapsulated in the inner aqueous phase of the multiple emulsion formulation under study. To analyse the quantity of the dye that was present in the outer aqueous phase, two 3ml samples were placed into 2 centrifuge tubes (sample A and B). Sample A was diluted with 2ml of phosphate buffer (0.05M, pH 6.8) and sample B with 2ml of a known quantity of dye solution. The tubes were centrifuged at 10,800 r.p.m. for 20 minutes. A 1 ml sample of the serum layer from both samples was clarified by adding 2 ml of tetrahydrofuran. The absorbance of both samples was recorded at a wavelength of 522nm.

Calculations:

The amount of dye in the outer aqueous phase ($X_L$) was defined as

$$X_L = A_a X_b / (A_b - A_a)$$

where $A_a$ and $A_b$ are the absorbances of the samples A and B respectively, and $X_b$ denotes the amount of dye added to sample B.
The % yield of the W/O/W emulsion was obtained using the following calculation:

$$\% \text{ Yield} = 100(X_E - X_L)/X_E$$

where $X_E$ is the amount of dye that was encapsulated inside the internal droplets.

(b) Thermogravimetric method

A microwave technique was developed to give the same results as the dye method for yield analysis. This was done in order to obtain the results for food products as the dye cannot be used in food preparations. The technique was as follows:
A 10 ml sample of the W/O/W emulsion was placed in a centrifuge tube and centrifuged at 10,800 r.p.m. for 20 minutes. The lower serum layer was removed using a syringe with a fine needle. The cream layer was then removed using a spatula and a thin layer (approximately 1.5-2g) was spread into a pre-weighed petri dish before weighing again. The petri dish was placed in a microwave oven to remove all the moisture on a low energy setting until a constant weight was obtained ensuring that the product did not burn (approximately 20 minutes). The exact settings and time of heating were established for the microwave oven used. The interstitial water is calculated by making an O/W emulsion of the same mean droplet size as the W/O/W emulsion, and subjecting it to the same procedure as above. The amount of interstitial water is the amount of water removed from the cream layer of the O/W emulsion during microwaving, expressed as a percentage.

Calculations:

$$\% \text{ Yield} = 100(W_a - W_b / W_a \times V_i) - \%IW$$

where $W_a$ is the weight of the emulsion before microwaving, $W_b$ is the weight of the emulsion after microwaving, $V_i$ is the volume fraction of the internal water phase, and %IW is the percentage of interstitial water.

**Example 3A**

Emulsions were prepared as outlined above, using the fat sources listed in Table 4. The primary emulsions contained 55% fat phase and 45% water phase, and the final W/O/W emulsions contained 20% of primary emulsion and 80% of external water phase. Sodium caseinate at 0.25% was used as the external water phase emulsifier. The W/O emulsifiers in the primary emulsion were as listed in table 4, and were used at a level of 8% of the primary emulsion, which therefore contained 47% fat. 0.1M phosphate buffer (pH 6.8) was used as the internal aqueous phase.
The W/O/W emulsions were analysed for particle size (d[4,3]) using a Malvern MasterSizer 2000 (Version 1) and % yield, at 1 day and 15 days after preparation. The results are shown in Table 4.
The results show that with rapeseed oil and PGPR as the primary emulsion emulsifier, a fine W/O/W emulsion was obtained. The water retention yields, however were very poor (50% at day 1, 41% at day 15). With the alcohol-insoluble fractions of lecithin the yields were higher and more stable: 85% and 79% with VP609, and 60 and 58% with VP627 (which contains c.5% phospholipids at the 8% level). Addition of 5% solid fat from anhydrous milkfat resulted in poor stability and yield with PGPR, whereas yield and stability were very good with both VP609 and VP627. When the fat source was anhydrous milkfat, the yield and stability with VP609 and VP627 were not affected and remained quite high, whereas with PGPR they were further reduced.
On the addition of 0.2M sodium chloride in the internal water phase, the stability was further reduced when PGPR was the emulsifier, whereas with VP 609 the yield increased to 140%, presumably due to the transfer of water from the external water phase to the internal water phase to balance the osmotic effect.
Similar results for yield and stability of the W/O/W emulsions were obtained when 0.25% or 2% skimmed milk powder were used in the external water phase instead of sodium caseinate. When the pH of the W/O/W emulsion containing sodium caseinate was reduced to 5.0, there was a high proportion of fat separation from the emulsion with PGPR, but no visible fat separation was observed with VP609. Some of the W/O/W emulsions could be heated to 95°C for 2 minutes without any effect on their stability and yield. Yields were slightly reduced when the ratio of water phase to fat phase in the primary emulsion was changed from 45:55 to 55:45.
Overall these results show the superiority of the alcohol-insoluble fractions of vegetable lecithin over PGPR as W/O emulsifiers in the primary emulsions of W/O/W emulsions.

**Example 3B**

W/O/W emulsions were prepared in exactly the same way as in Example 3A, except that they were made using an APV Rannie homogeniser and the primary aqueous phase consisted of water instead of phosphate buffer. Before homogenising, the emulsions were coarsely mixed using an Ultraturrax mixer for 2 minutes on maximum speed. The samples were analysed as for Example 3A and also for viscosity using a Brookfield Viscometer Model DV-1 with the appropriate spindles, and the results are shown in Table 5.
The results confirmed the superiority of VP609 over PGPR in giving improved yield and stability in W/O/W emulsions, especially when the W/O/W emulsions contained solid fat.

**Example 3C**

W/O/W emulsions were prepared and analysed as in Example 3A, except that the ratio of primary emulsion to external water phase was 45:55 instead of 20:80 and the internal water phase was water. The final W/O/W emulsion therefore contained 24.75% fat. The aim of this example was to test the effectiveness of different emulsifiers in W/O/W emulsions, and the results are shown in Table 6.

The results clearly show that the yield and stability of the W/O/W emulsions were greatest for both rapeseed oil and anhydrous milkfat as fat sources, when the alcohol-insoluble fractions of vegetable lecithin of the present invention were used. The emulsifiers can be listed in decreasing order of effectiveness, as follows:-

VP609 >= Nathin PI-3F >= VP627 > Nathin PE-5F > Bolec C > Alcolec > Bolec FS > PGPR.

**Example 3D**

W/O/W emulsions were prepared and analysed as in Example 3C except that the external water phase contained maltodextrin at the levels given in Table 7, as well as 0.25% sodium caseinate as emulsifier. The W/O emulsifier was VP609 in all emulsions, and was used at a level of 8% of the primary emulsion. The results are shown in Table 7.

The inclusion of 5% of maltodextrin in the external water phase does not affect the yield, stability or mean droplet size of the W/O/W emulsions. However, the inclusion of 10% maltodextrin in the external water phase slightly decreased the yield and increased the mean droplet size on storage in some cases.

The steady-state shear viscosities of the W/O/W emulsions were measured at 21°C after 7 days' storage as a function of the shear stress, using a Bohlin CS-50 rheometer equipped with a C14 cup and bob geometry. The results are shown in Figures 1a and 1b. As expected, the W/O/W emulsions with 5% maltodextrin have lower viscosities and are more shear sensitive than the emulsions with 10% maltodextrin.

**Example 3E**

W/O/W emulsions were prepared and analysed as in Example 3D, except that anhydrous milkfat was used as fat source in all examples, and that different ingredients were added to the internal and/or external water phases as listed in Table 8. 0.25% sodium caseinate was used as the emulsifier in the external water phase in all cases. The results can be seen in Table 8.

The results show that with 10% maltodextrin in the external water phase there is an increase in mean droplet size on storage, whereas when sodium chloride or calcium chloride are added, the mean droplet size is larger at day 1 and increased further on storage. However, the yield remained the same or even increased. This suggests that the addition of these ingredients to the external water phase results in the flocculation of the individual droplets of the W/O/W emulsion without reducing the stability and yield of the emulsion. The rheology of these W/O/W emulsions varies from a Newtonian liquid to a pseudoplastic liquid to a spreadable product, and depends on the type of fat used and the ingredients used in the internal and external water phases.

Simple O/W emulsions were also made using VP609, VP627, Nathin PI-3F or Nathin PE-5F as emulsifier, and containing the same ingredients in the water phases. The mean droplet sizes and rheological properties of these O/W emulsions were similar to those of the equivalent W/O/W emulsions in most cases. Different rheological properties could be obtained by changing the ingredients in the water phase, while keeping the volume fractions of the phases constant. However, if an O/W emulsion is compared to its W/O/W equivalent (same volume fractions of phases, same rheological properties), the W/O/W emulsion will have a higher number of fat droplets in the external water phase and will therefore have a creamier mouthfeel, yet have a lower fat content.

Table 4

| Type of Fat | W/O Emulsifier | Primary water phase | d[4,3] ( m) | | % Yield | | Appearance |
|---|---|---|---|---|---|---|---|
| | | | Day 1 | Day 15 | Day 1 | Day 15 | |
| RSO | PGPR | Buffer | 3.2 | 3.2 | 50 | 41 | Fine emulsion, like milk |
| RSO | VP627 | Buffer | 3.3 | 3.2 | 60 | 58 | as above |
| RSO | VP609 | Buffer | 3.4 | 3.4 | 85 | 79 | as above |
| RSO + 5% SF | PGPR | Buffer | 3.4 | 3.6 | 50 | 38 | Some fat separation |
| RSO + 5% SF | VP627 | Buffer | 3.4 | 3.6 | 70 | 70 | Fine emulsion |
| RSO + 5% SF | VP609 | Buffer | 3.2 | 5.0 | 82 | 84 | Fine emulsion |
| AMF | PGPR | Buffer | 4.0 | 4.0 | 44 | 32 | >50% fat separation |
| AMF | VP627 | Buffer | 4.0 | 14.0 | 80 | 74 | Fine emulsion |
| AMF | VP609 | Buffer | 4.4 | 11.8 | 88 | 76 | Fine emulsion |
| AMF | PGPR | 0.2M NaCl | 7.0 | 7.0 | 82 | 60 | >80% fat separation |
| AMF | VP627 | 0.2M NaCl | 3.8 | 8.5 | 95 | 84 | Fine emulsion |
| AMF | VP609 | 0.2M NaCl | 3.2 | 8.0 | 140 | 120 | Fine emulsion |

RSO: rapeseed oil

SF: solid fat content at 20°C from anhydrous milkfat of MP 28°C

AMF: anhydrous milkfat

Table 5

| Type of Fat | Primary Emulsifier | d[4,3] ( m) | | % Yield* | | Viscosity (mPa.s) | Appearance |
|---|---|---|---|---|---|---|---|
| | | Day 1 | Day 15 | Day 4 | Day 18 | | |
| RSO | PGPR | 3.0 | 2.7 | 35 | 35 | 27.2 | Fine emulsion |
| RSO | VP609 | 1.3 | 1.3 | 59 | 47 | 50.8 | Fine emulsion |
| RSO + 5% SF | PGPR | 2.6 | 3.0 | 45 | 39 | 65.6 | 50% fat separation |
| RSO + 5% SF | VP609 | 1.4 | 1.6 | 63 | 46 | 47.6 | Fine emulsion |
| AMF | PGPR | 3.0 | 1.5 | 42 | 32 | 74.4 | >80% fat separation |
| AMF | VP609 | 1.5 | 1.8 | 75 | 66 | 53.6 | Fine emulsion |

*Where yield values are quoted for emulsions which showed fat separation, the yields were calculated on the fraction of the emulsion that had not separated out.

RSO: rapeseed oil

SF: solid fat content at 20° from anhydrous milkfat of MP 28°C

AMF: anhydrous milkfat

EP 0 997 075 A1

Table 6

| Fat | % Fat in Primary Emulsion | Primary Emulsifier | | | | d[4,3] (m) | | % Yield* | | Appearance |
|---|---|---|---|---|---|---|---|---|---|---|
| | | Type | % | PC:PE | PC:PI | Day 1 | Day 15 | Day 1 | Day 15 | |
| RSO | 47.0 | PGPR | 8 | - | - | 7.0 | 7.0 | 45 | 40 | Some oil drops on surface |
| RSO | 47.0 | VP609 | 8 | 1:3.29 | 1:3.43 | 2.2 | 2.2 | 70 | 72 | Few oil drops on surface |
| AMF | 47.0 | VP609 | 8 | 1:3.29 | 1:3.43 | 3.2 | 3.8 | 75 | 75 | 2% fat lumps on surface |
| RSO | 42.4 | VP627 | 12.6 | 1:3.29 | 1:3.43 | 3.0 | 2.8 | 64 | 66 | Few oil drops on surface |
| AMF | 42.4 | VP627 | 12.6 | 1:3.29 | 1:3.43 | 3.6 | 4.2 | 72 | 76 | 2% fat lumps on surface |
| RSO | 47.0 | Alcolec | 8.0 | NA | NA | 2.8 | 3.0 | 50 | 55 | 10% fat separation |
| AMF | 47.0 | Alcolec | 8.0 | NA | NA | 3.0 | 7.5 | 58 | 52 | 20% fat separation on surface and pot walls |
| RSO | 42.8 | Bolec FS | 12.2 | 1:0.20 | 1:0.025 | 2.0 | 2.6 | 47 | 42 | 10% fat separation |
| AMF | 42.8 | Bolec FS | 12.2 | 1:0.20 | 1:0.025 | 2.0 | 16.0 | 65 | 58 | 30% fat separation |
| RSO | 43.4 | Bolec C | 11.6 | 1:1.13 | 1:1.035 | 3.4 | 3.2 | 62 | 58 | 10% fat separation |
| AMF | 43.4 | Bolec C | 11.6 | 1:1.13 | 1:1.035 | 4.0 | 10.0 | 62 | 64 | 50% fat separation on surface and pot walls |
| RSO | 43.4 | Nathin PI-3F | 11.6 | 1:2.8 | 1:2.4 | 2.2 | 2.5 | 70 | 67 | Few oil drops, good emulsion |
| AMF | 43.4 | Nathin PI-3F | 11.6 | 1:2.8 | 1:2.4 | 2.2 | 2.6 | 72 | 68 | Few fat clumps, good emulsion |
| RSO | 36.0 | Nathin PE-5F | 19.0 | 1:1.86 | 1:0.57 | 2.0 | 2.5 | 56 | 54 | About 10% fat separation |
| AMF | 36.0 | Nathin PE-5F | 19.0 | 1:1.86 | 1:0.57 | 2.0 | 4.0 | 60 | 58 | Some fat clumps visible on surface and on pot walls |

*Where yield values are quoted for emulsions which showed fat separation, the yields were calculated on the fraction of the emulsion that had not separated out.

RSO: rapeseed oil

AMF: anhydrous milkfat

EP 0 997 075 A1

Table 7

| Type of Fat | Maltodextrin (% of primary emulsion) | d[4,3] ($\mu$m) | | % Yield | |
|---|---|---|---|---|---|
| | | Day 1 | Day 15 | Day 1 | Day 15 |
| RSO | 5 | 2.0 | 2.0 | 72 | 75 |
| RSO | 10 | 2.2 | 10.5 | 75 | 62 |
| RSO + 5% SF | 5 | 2.0 | 2.4 | 74 | 62 |
| RSO + 5% SF | 10 | 2.0 | 3.5 | 78 | 60 |
| AMF | 5 | 2.0 | 5.8 | 75 | 66 |
| AMF | 10 | 2.6 | 15.0 | 75 | 75 |

The effect of adding 2% and 5% skimmed milk powder to the secondary water phase in the above W/O/W emulsions resulted in the increase of d[4,3] values in all cases. The yield with 5% skimmed milk powder was higher than with 2% skimmed milk powder.

RSO: rapeseed oil
SF: solid fat content at 20°C from anhydrous milkfat of MP 28°C
AMF: anhydrous milkfat

Table 8

| Internal water phase | External water phase | Ph | d[4,3] (μm) | | % Yield*** | | Appearance |
|---|---|---|---|---|---|---|---|
| | | | Day 1 | Day 15 | Day 1 | Day 15 | |
| 0.05M phosphate buffer | Water | 6.8 | 2.5 | 5.0 | 82 | 74 | Pastel yellow liquid. Small amount of fat separation on pot walls |
| 5% lactose | 5% lactose | 6.8 | 3.0 | 3.5 | 75 | 70 | Not recorded |
| water | 10% maltodextrin | 6.8 | 2.5 | 12.0 | 75 | 73 | Pastel yellow, viscous liquid. Like double cream. No fat separation |
| 10% lactose | 5% maltodextrin | 6.8 | 4.8 | 5.5 | 70 | 65 | Not recorded |
| 10% lactose | 10% maltodextrin | 6.8 | 2.5 | 24.0 | 76 | 70 | Not recorded |
| 10% lactose | 0.5m NaCl | 6.8 | 13.0 | 15.5 | 85 | 100 | Pastel yellow, spreadable soft-solid. Like margarine. No fat separation |
| 10% lactose | 10% lactose + 10mM CaCl₂* | 6.8 | 20.0 | 41.0 | 70 | 80 | Not recorded |
| 10% lactose | 10% lactose | 5.0** | 20.0 | 9.5 | 75 | 80 | Not recorded |
| 0.5M NaCl | 0.3M NaCl | 6.8 | 10.5 | 14.0 | 80 | 90 | Pastel yellow, spoonable soft-solid. Like soft margarine. No fat separation |

* CaCl2 added after preparation of W/O/W emulsion

** pH reduced after making W/O/W emulsion

***Where yield values are quoted for emulsions which showed fat separation, the yields were calculated on the fraction of the emulsion that had not separated out.

14

**Claims**

1. An edible water-in-oil-in-water emulsion comprising an external water phase and a dispersed phase which comprises a water-in-oil emulsion having a fat phase and an internal water phase, wherein the water-in-oil emulsion includes an emulsifier comprising an alcohol-insoluble fraction of vegetable lecithin obtainable using alcohols with 1 to 3 carbon atoms.

2. An emulsion according to claim 1, wherein the alcohol-insoluble fraction of vegetable lecithin has a hydrophile-lipophile balance value of 1 to 3.

3. An emulsion according to claim 1 or claim 2, wherein the alcohol-insoluble fraction of vegetable lecithin is characterized by a phosphatidylcholine:phosphatidylethanolamine ratio of from 1:1.25 to 1:5 and a phosphatidylcholine: phosphatidylinositol ratio of from 1:1.25 to 1:6.

4. An emulsion according to claim 3, wherein the alcohol-insoluble fraction of vegetable lecithin is characterized by a phosphatidylcholine:phosphatidylethanolamine ratio of from 1:2.5 to 1:5 and a phosphatidylcholine:phosphatidylinositol ratio of from 1:2 to 1:5.

5. An emulsion according to any one of claims 1 to 4, wherein the water-in-oil emulsion comprises 0.1 to 20% by weight of the alcohol-insoluble fraction of vegetable lecithin expressed on an oil-free basis.

6. An emulsion according to claim 5, wherein the water-in-oil emulsion comprises 2 to 10% by weight of the alcohol-insoluble fraction of vegetable lecithin expressed on an oil-free basis.

7. An emulsion according to any one of the preceding claims, wherein the ratio of water-in-oil emulsion to external water phase is in the range 60:40 to 10:90 by weight of the water-in-oil-in-water emulsion.

8. An emulsion according to claim 7, wherein the ratio of water-in-oil emulsion to external water phase is in the range 40:60 to 15:85 by weight of the water-in-oil-in-water emulsion.

9. An emulsion according to any one of the preceding claims, wherein the mean droplet size on a volume distribution basis (d[4,3]) of the water-in-oil-in-water emulsion is in the range 1.5 to 10 µm when the external and internal water phases contain no solutes having an osmotic effect or functional food ingredients and have a pH in the range 6 to 7.

10. An emulsion according to claim 9, wherein the mean droplet size on a volume distribution basis (d[4,3]) of the water-in-oil-in-water emulsion is in the range 2 to 5 µm.

11. An emulsion according to any one of the preceding claims, wherein the fat phase comprises 18 to 99% by weight of the water-in-oil emulsion.

12. An emulsion according to claim 11, wherein the fat phase comprises 35 to 60% by weight of the water-in-oil emulsion.

13. An emulsion according to any one of the preceding claims, wherein the external water phase comprises an oil-in-water emulsifier at a concentration of 0.05 to 5.0% by weight of the external water phase.

14. An emulsion according to claim 13, wherein the external water phase comprises an oil-in-water emulsifier at a concentration of 0.1 to 2.0% by weight of the external water phase.

15. An emulsion according to any one of the preceding claims, wherein the internal water phase comprises solutes having an osmotic effect and/or functional food ingredients.

16. An emulsion according to any one of the preceding claims, wherein the external water phase comprises solutes having an osmotic effect and/or functional food ingredients.

17. A food product comprising an emulsion as defined in any one of the preceding claims.

18. A food product according to claim 17 which is a dairy product substitute.

**19.** Use of an alcohol-insoluble fraction of vegetable lecithin as a water-in-oil emulsifier in an edible water-in-oil-in-water emulsion as defined in any one of claims 1 to 16.

**20.** Use of an emulsion as defined in any one of claims 1 to 16 as a dairy product substitute.

**21.** A method of preparing an edible water-in-oil-in-water emulsion comprising emulsifying an internal water phase with a fat phase comprising an alcohol-insoluble fraction of vegetable lecithin obtainable using alcohols with 1 to 3 carbon atoms to form a water-in-oil emulsion and emulsifying the water-in-oil emulsion with an external water phase.

**22.** A method according to claim 21 comprising the steps of:

(i) providing ingredients for each of the internal water phase and the fat phase;
(ii) preparing the internal water phase and fat phase;
(iii) providing an alcohol-insoluble fraction of vegetable lecithin and introducing it into the fat phase;
(iv) optionally heating separately the internal water phase and fat phase;
(v) combining the internal water phase and fat phase to form a water-in-oil emulsion by means of a mixing and/or a homogenization process;
(vi) optionally pasteurizing the water-in-oil emulsion;
(vii) optionally cooling the water-in-oil emulsion;
(viii) providing ingredients for the external water phase;
(ix) optionally heating separately the external water phase and the water-in-oil emulsion;
(x) combining the external water phase and water-in-oil emulsion to form a water-in-oil-in-water emulsion by means of a mixing and/or a homogenization process;
(xi) optionally pasteurizing the water-in-oil-in-water emulsion;
(xii) cooling the water-in-oil-in-water emulsion.

**23.** A method of manufacturing a food product comprising the steps of:

(i) providing an emulsion as defined in any one of claims 1 to 16;
(ii) introducing the emulsion into a food product.

FIGURE 1a

FIGURE 1b

# EP 0 997 075 A1

## EUROPEAN SEARCH REPORT

**European Patent Office**

**Application Number**

EP 99 30 8581

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | MATSUMOTO, S., UEDA, Y., KITA, Y., AND YONEZAWA, D.: "Preparation of water-in-olive oil-in water multiple-phase emulsions in an eatable form." AGRICULTURAL AND BIOLOGICAL CHEMISTRY, vol. 42, no. 4, 1978, pages 739-743, XP002130042 See whole document | 1,3,5-8, 11-21,23 | A23D7/00 A23D7/015 A23J7/00 |
| A | | 2,4,9, 10,22 | |
| Y | MARK, H. F., ET AL.: "Kirk-Othmer Encyclopedia of Chemical Technology, 3rd ed., Vol. 14" 1978 , WILEY , NEW YORK XP002130043 * page 250 – page 267 * | 1,3,5-8, 11-21,23 | |
| A | | 2,4,9, 10,22 | |
| A | US 5 332 595 A (GAONKAR ANILKUMAR G) 26 July 1994 (1994-07-26) * column 1, line 56-66 * * column 3, line 34-60 * * column 11, line 1-12 * | 2,22 | |

**TECHNICAL FIELDS SEARCHED (Int.Cl.7)**

A23D
A23J

The present search report has been drawn up for all claims

| Place of search | Date of completion of the search | Examiner |
|---|---|---|
| THE HAGUE | 10 February 2000 | Rooney, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 8581

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2000

| Patent document cited in search report | Publication date | Patent family member(s) | Publication date |
|---|---|---|---|
| US 5332595 A | 26-07-1994 | NONE | |

EPO FORM P0459

For more details about this annex : see Official Journal of the European Patent Office, No. 12/82